# EUROPEAN PATENT SPECIFICATION

(11) **EP 3 288 746 B1**
(45) Date of publication and mention of the grant of the patent: **12.06.2019**
(21) Application number: 16718901.8
(22) Date of filing: 25.04.2016
(51) Int. Cl.: B29C 70/46, B29C 70/56, B29C 70/38, B29C 70/68, B29C 33/30

(54) **A METHOD AND APPARATUS FOR FORMING A COMPOSITE COMPONENT**
VERFAHREN UND VORRICHTUNG ZUM FORMEN EINER VERBUNDSTOFFKOMPONENTE
PROCÉDÉ ET APPAREIL DE FORMATION D'UN ÉLÉMENT COMPOSITE

(30) Priority: 30.04.2015 GB 201507412
(43) Date of publication of application: 07.03.2018
(73) Proprietor: Rolls-Royce PLC, London SW1E 6AT (GB)
(72) Inventor: MORAM, Jonathan Paul, Derby DE24 8BJ (GB); WILES, Gary, Derby DE24 8BJ (GB); MARENGO, Giovanni Antonio, Derby DE24 8BJ (GB); BARTON-SMITH, Terence Mark, Derby DE24 8BJ (GB)
(74) Representative: Haseltine Lake Kempner LLP
(86) International application number: PCT/GB2016/051156
(87) International publication number: WO 2016/174401

(56) References cited:
- GB-A- 2 486 231
- US-A- 5 348 602

## Description

The invention relates to a method and apparatus for forming a composite component, in particular, a composite component having a radial flange.

Composite materials are increasingly used for components that require particular combinations of material properties. In particular, composite materials such as Carbon Fibre Reinforced Polymer (CFRP) are commonly used for components in the aerospace and other industries due to their high stiffness and low weight.

It is frequently desirable to manufacture a component with a flange, such as an annular flange on a casing for a gas turbine, or the sides of a spar for a wing. Where such components are to be manufactured from composite materials, the formation of the flange can pose an engineering problem. For example, it may be difficult to layup composite material on a flanged mould, in particular in the region of bends between the main part of the mould and the flange that may be hard to access.

One known method of manufacturing a composite component with an integral flange is disclosed in GB2486231, which discloses a mould for a composite pre-form having a first portion and a movable second portion comprising a plurality of circumferentially spaced movable sectors. After laying up plies of unidirectional composite tape on the mould, the mould and pre-form are heated in an autoclave and the movable second part is actuated to deform a part of the pre-form to form the flange.

However, the circumferentially spaced sectors of GB2486231 provide a discontinuous surface for forming the radial flange, which may result in a poor quality flange.

It is therefore desirable to provide an improved tool for manufacturing a composite component.

According to a first aspect of the invention there is provided a method of forming a composite component having a curved body and an integral flange from a pre-form using forming apparatus comprising: a tool comprising a curved body portion having a lay-up surface and a forming assembly comprising a plurality of forming elements each having a lay-up surface and a primary flange-forming surface; and a plurality of filler elements each having a secondary flange-forming surface; the method comprising:
providing a pre-form over the lay-up surfaces of the curved body portion and the forming elements of the tool in a layup configuration of the forming assembly; moving the forming elements radially outwardly from the layup configuration to respective forming positions so that the forming elements are circumferentially spaced apart from one another to form gaps therebetween; moving the filler elements radially outwardly to respective forming positions in the circumferential gaps between the forming elements so that the primary and secondary flange-forming surfaces form a substantially continuous flange-forming surface in a forming configuration of the forming assembly;
wherein movement of the forming assembly from the layup configuration to the forming configuration causes a region of the pre-form to deform between the continuous flange-forming surface and a counteracting forming surface to form the integral flange of the component.

Providing a pre-form over the lay-up surfaces may comprise providing a body region of the pre-form corresponding to the curved body of the composite component on the layup surface of the curved body portion; and providing a flange region of the pre-form over the lay-up surfaces of the forming elements. Movement of the forming assembly from the layup configuration to the forming configuration may cause at least the flange region of the pre-form to deform between the continuous flange-forming surface and the counteracting forming surface to form the integral flange of the component.

The integral flange may be an integral curved flange.

The forming elements may reach their respective forming positions before the filler elements reach their respective forming positions.

The method may further comprise providing the tool in the layup configuration so that the lay-up surfaces of the curved body portion and the forming elements are substantially continuous. The method may further comprise laying-up the pre-form on the tool in the layup configuration.

The method may further comprise providing a counteracting support, and the counteracting support may define the counteracting forming surface. The counteracting support may be positioned to oppose the flange-forming surfaces after the pre-form is laid up on the tool and before the forming elements and filler elements are moved from the layup configuration to the forming configuration.

The forming elements and filler elements may be moved simultaneously. Alternatively, the forming and filler elements may be moved in sequence.

The method may further comprise heating the tool before moving the forming elements and filler elements from the layup configuration to the forming configuration. The tool may be heated after the pre-form is laid up on the tool. Additionally or alternatively, the tool may be heated before and/or during layup of the pre-form on the tool. The tool may be heated by heating elements coupled to the tool.

According to a second aspect of the invention there is provided a method of forming an annular or semi-annular component in accordance with the first aspect of the invention.

According to a third aspect of the invention there is provided a method of forming a casing for a gas-turbine engine in accordance with the first or second aspects of the invention.

In methods according to the first, second or third aspects of the invention, the tool or forming apparatus may be in accordance with the fourth or fifth aspects of the invention.

According to a fourth aspect of the invention there is provided a tool for forming a composite component having a curved body and an integral flange from a pre-form, the tool comprising: a curved body portion having a lay-up surface; and a forming assembly having a lay-up configuration and a forming configuration, the forming assembly comprising: a plurality of forming elements each having a lay-up surface and a primary flange-forming surface, the forming elements being radially outwardly moveable from the lay-up configuration to the forming configuration, in which the forming elements are circumferentially spaced from one another; a plurality of filler elements each having a secondary flange-forming surface, the filler elements being arranged to move into the circumferential gaps between the forming elements in the forming configuration so as to form a substantially continuous flange-forming surface; and wherein in use a pre-form is disposed on the layup surfaces of the curved body portion and the forming elements in the layup configuration, and wherein movement to the forming configuration causes the pre-form to be deformed between the continuous flange-forming surface and a counteracting forming surface to form the integral flange. In the lay-up configuration, the lay-up surfaces of the forming elements may be substantially continuous with one another and with the lay-up surface of the body portion. The body portion of the tool may be for receiving a first region of a pre-form corresponding to the curved body of the composite component. The forming assembly may be adjacent the curved body portion.

The lay-up surface of each forming element may be a radially outer surface of the forming element, and the primary flange-forming surface of each forming element may extend radially inwardly from the respective lay-up surface. Each filler element may have a radially outer filler surface arranged to extend into a gap formed between the radially outer lay-up surfaces of the forming elements in the forming configuration to form a substantially continuous outer forming surface. The filler elements may be concealed radially within the forming elements when the forming assembly is in the lay-up configuration.

The layup surface of the curved body portion may be substantially continuous with the layup surfaces of the forming elements in the layup configuration. The layup surface of the curved body portion may be radially spaced apart from the layup surfaces of the forming elements in the layup configuration.

The primary and secondary flange-forming surfaces may extend at least partly radially. The primary and secondary forming surfaces may be substantially radially extending (i.e. substantially normal to the axis of the tool).

The forming elements and the filler elements may be alternately arranged. The forming elements and the filler elements may be alternately arranged around an axis of the tool.

The tool may further comprise a drive means for moving the forming assembly from the lay-up configuration to the forming configuration. The drive means may comprise a plurality of drive units and each drive unit may be arranged to move at least one forming element. Each drive unit may be configured to move the or each respective forming element and an adjacent filler element from respective retracted positions corresponding to the lay-up configuration to respective extended positions corresponding to the forming configuration. Each drive unit may be configured so that the respective filler element reaches its respective forming position after the forming element reaches its respective forming position. A lost motion connection may be provided between each drive unit and the respective forming element. The lost motion connection may comprise a resilient means which biases the forming element away from the drive unit.

Each drive unit may comprise a guide block, the respective forming element may be guided for displacement with respect to the guide block by means of a guide rod or rail, and the resilient means may comprise a spring which acts between the guide block and the forming element. The guide block may be fixedly secured to the filler element so that the filler element cannot move relative to the guide block.

The tool may be for forming an annular or semi-annular component. The tool may be for forming a casing for a gas-turbine engine.

According to a fifth aspect of the invention there is provided a forming apparatus for forming a composite component having a curved body and an integral flange, the apparatus comprising: a tool in accordance with the fourth aspect of the invention; and a counteracting support detachably attachable to the tool over a pre-form received on the tool, the counteracting support having a counteracting forming surface arranged to oppose the flange-forming surfaces of the forming assembly so that in use a region of the pre-form is deformed between the forming assembly and the counteracting support to form the flange of the component.

The invention will now be described, by way of example, with reference to the accompanying drawings, in which:
Figure 1 schematically shows a cutaway view of a gas turbine engine;
Figure 2 schematically shows the casing of the gas turbine engine of Figure 1;
Figure 3 schematically shows a partial cross-sectional view of an apparatus for manufacturing a composite component, in which a forming element of the apparatus is shown in a lay-up configuration;
Figure 4 schematically shows a partial cross-sectional view of the apparatus of Figure 3 in which the forming element has moved relative a body portion of the apparatus;
Figure 5 schematically shows a partial cross-sectional view the apparatus of Figures 3 and 4 in which the forming element is in the forming configuration;
Figure 6 schematically shows a radial view of a forming assembly of the apparatus in a lay-up configuration;
Figure 7 schematically shows a plan view the forming assembly in the lay-up configuration;
Figure 8 schematically shows a radial view of the forming assembly in a forming configuration;
Figure 9 schematically shows a plan view of the forming assembly in the forming configuration;
Figure 10 schematically shows actuation mechanisms for the forming assembly; and
Figure 11 schematically shows the apparatus of Figures 3-10 in perspective view.

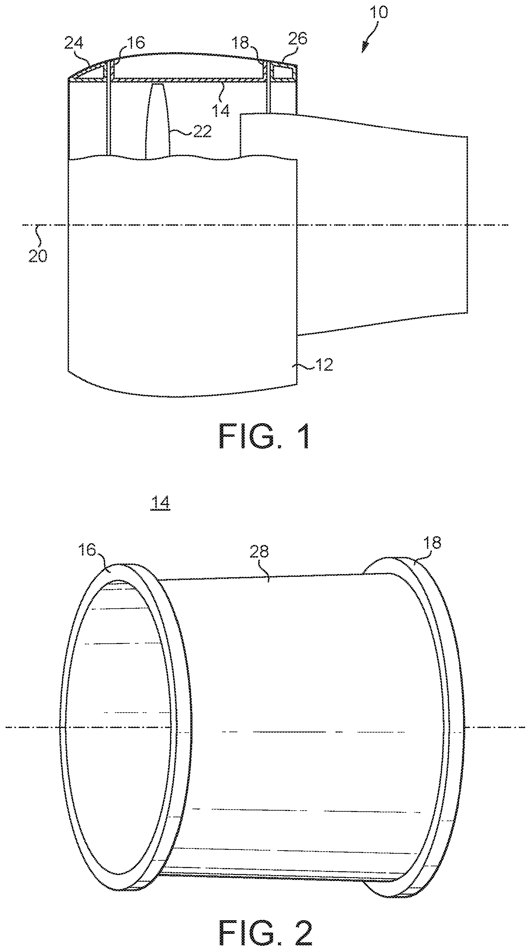

**Figure 1** shows a gas turbine engine 10 comprising an exterior nacelle 12 supported on an annular casing 14 having forward and aft flanges 16, 18. The casing 14 is centred on the axis 20 of the engine 10 and houses a fan 22 comprising a plurality of fan blades. Forward and aft annular casing boxes 24, 26 support the front and rear portions of the nacelle 12.

As shown in **Figure 2**, the casing 14 has a curved main body 28 which is generally cylindrical and is provided with forward and aft flanges 16, 18 extending radially outwardly with respect to the curvature of the main body.

The casing 14 is composed of composite material, such as Carbon Fibre Reinforced Polymer (CFRP). In particular, the casing 14 comprises a plurality of plies of pre-impregnated ("pre-preg") unidirectional composite tape that been have been applied to a mould in a lay-up process and cured.

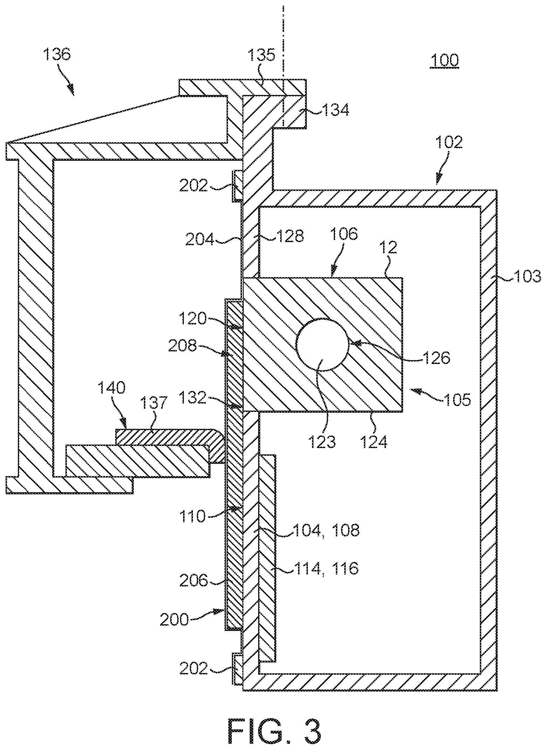

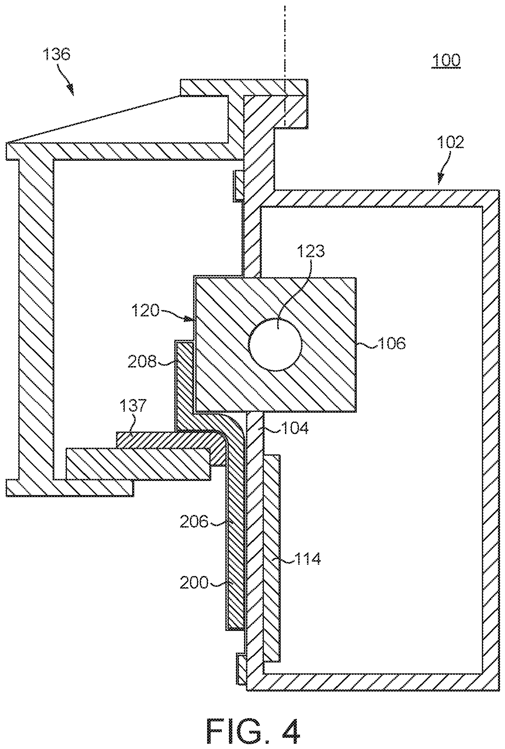

**Figures 3 to 5** show cross sectional views of an apparatus 100 for manufacturing the composite casing 14.

The apparatus 100 comprises a generally annular tool 102 that is configured to rest on a horizontal surface, such as a workshop floor, so that its central axis (not shown) extends vertically, although in other embodiments it may be supported in any orientation. The tool 102 comprises an annular support structure 103 for supporting a forming assembly 105 comprising a plurality of forming elements 106 and filler elements (not shown), and a body portion 104.

The body portion 104 comprises a plurality of circumferentially extending curved body panels 108 that together define a cylindrical lay-up surface 110 for a composite pre-form 200. In this embodiment, there are six curved body panels 108 each having an angular extent of 60º. The body portion 104 is provided with a body heater 114 comprising a plurality of heater mats 116 mounted to the radially inner surfaces of the curved body panels 108 for heating the body panels 108, and thereby a pre-form 200 disposed on the outer lay-up surface 110 of the body portion 104. In this example, the body panels 108 are composed of a thermally conductive metal, in particular, stainless steel or aluminium.

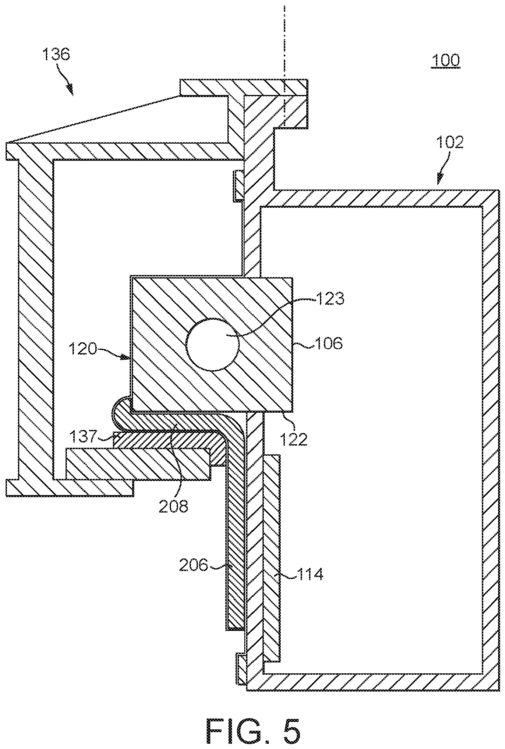

The forming assembly 105 is mounted to the support structure 103 above the body portion 104 by an actuation mechanism (not shown) and comprises a plurality of forming elements 106 which are radially movable with respect to the support structure 103 and the body portion 104 between a retracted or lay-up position (for example, Figure 3) and an extended or forming position (for example, Figure 5). The forming elements 106 are circumferentially arranged around the tool 102.

Each forming element 106 has a circumferentially extending radially outer lay-up surface 120 which is configured to be substantially contiguous and continuous with the lay-up surface 110 of the adjacent body portion 104 in the lay-up configuration of the forming assembly 105 (i.e. with the forming elements in the lay-up position). In the lay-up configuration, the lay-up surfaces 120 of the forming elements 106 are substantially continuous with each other around the axis of the tool 102.

In the forming configuration, the lay-up surfaces 120 of the forming elements are radially spaced apart from the lay-up surface 110 of the adjacent body portion 104, and there are circumferentially extending gaps between them.

The forming elements 106 are configured so that the lay-up surfaces 120 of each element 120 has a radius of curvature corresponding to the radial position of the lay-up surface 120 in the forming position. Accordingly, the lay-up surfaces 120 extend in a true circumferential direction when in the forming position, and extend approximately circumferentially (or substantially circumferentially) in the retracted or lay-up position.

In this example, each forming element 106 is in the form of a semi-annular block or sector that defines the radially outer lay-up surface 120 and has four radially extending sides: lower and upper side surfaces 122, 124 and angularly spaced side surfaces (not shown). The lower side surface 122 acts as a primary flange-forming surface during a forming operation, as will be described in detail below. In this embodiment, each main flange-forming portion 106 has an angular extent of 12º, and so the tool 102 comprises 30 separate main flange-forming portions.

Each main flange-forming portion 106 comprises a cavity 126 in which there is disposed a flange heater 123 for heating the main flange-forming portion 106. Each main flange-forming portion 106 is composed of a thermally conductive metal, in particular, stainless steel or aluminium. The flange heaters 123 and the body heater 114 are coupled to a controller (not shown) for controlling flange forming and curing operations, as will be described below.

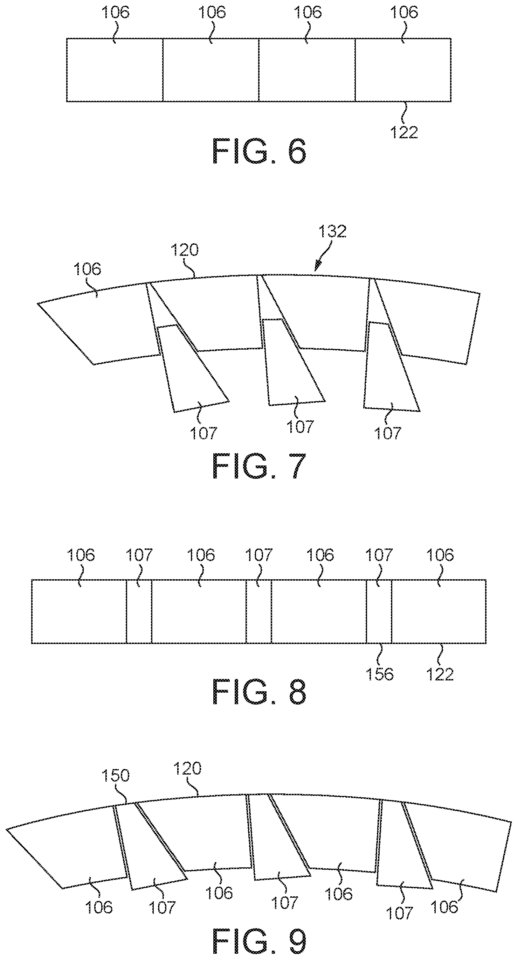

As shown in **Figures 6-9****,** the forming assembly 105 additionally comprises a plurality of filler elements 107. The filler elements 107 are in the form of semi-annular blocks configured to move from a radially inner retracted or lay-up position to a radially outer extended or forming position, corresponding to the lay-up and forming configurations of the forming assembly 105 respectively. The blocks have a radially outer filler surface 150, annular spaced side surfaces 152, 154, and lower and upper side surfaces 156, 158. The lower side surface 156 forms a secondary flange-forming surface during a forming operation, as will be described in detail below.

In the lay-up configuration (Figures 6 and 7), the filler elements 107 are disposed radially inwardly of the lay-up surfaces of the forming elements 106, so that the filler elements are concealed from a radially outer position. The forming elements 106 have tapered angularly spaced side surfaces 160, 162 which, in the lay-up configuration of the forming assembly, define between them a recess for receiving the filler elements 107 (as best shown in Figure 7).

In the forming configuration (Figures 8 and 9), the filler elements 107 extend into the circumferentially extending gaps between the forming elements 106 so that the secondary flange-forming surface 156 of the filler elements 107 are substantially continuous with the primary flange-forming surfaces 122 of the forming elements 106. Additionally, in the forming configuration, the radially outer filler surface 150 extends into the circumferentially extending gaps between the lay-up surfaces 120 of the forming elements 106, so that the lay-up surfaces 120 and filler surfaces 150 form a substantially continuous circumferentially extending surface.

The forming and filler elements 106, 107 are coupled to actuators (not shown) for moving them between the respective lay-up and extended positions.

Referring back to Figures 3-5, the tool 102 further comprises a generally cylindrical continuation portion 128 disposed above the forming assembly 105 and having a radially outer lay-up surface 130 arranged to be contiguous and continuous with the lay-up surfaces 120 of the forming elements 106 in the lay-up configuration. The continuation portion 128 is supported on the support structure 103 and comprises a plurality of continuation panels 131.

The lay-up surfaces 110, 120, 130 of the body portion 104, forming elements 106 and the continuation portion 128 of the tool 102 together define a generally cylindrical continuous lay-up surface 132 for laying up a cylindrical pre-form 200.

The tool 102 further comprises a plurality of attachment portions 134 angularly spaced around the circumferential extent of the tool 102 above the continuation portion 128 for coupling with a flange support structure 136. The flange support structure 136 is in the form of an annular frame configured to extend around a pre-form 200 disposed on the lay-up surface 132 of the tool and is detachably attachable to the tool 102 by cooperating attachment portions 134, 135 on the tool 102 and the flange support structure 136 respectively. For example, the attachment portions 134, 135 may be coupled by bolts.

The flange support structure 136 comprises a counteracting flange support portion 137 arranged to counteract the flange-forming surfaces 122, 156 of the forming elements 106 and filler elements 107 of the tool 102 respectively during a flange forming operation, so as to control the shape of the formed flange.

In particular, the counteracting flange support portion 137 is arranged to abut a pre-form 200 disposed on the lay-up surface of the tool and defines an annular counteracting forming surface 140 for shaping the flange region of the component as it is formed in the forming operation. The counteracting forming surface 140 is oriented substantially radially (horizontally in Figures 3-5) and positioned axially below the level of the flange-forming surfaces 122, 156 of the forming assembly 105 by a distance corresponding to the desired thickness of the flange. The counteracting forming surface 140 has a radially inner rounded bend or transition portion for forming a bend or transition region where the flange region and the main body region of the component meet. In this embodiment, the transition portion has a relatively low curvature so that there is a continuous bend between the main body and flange of the composite component. In particular, in this embodiment the flange-forming portion is arranged to form a flange having a radial extent of approximately 65mm, and the radius of curvature for the flange is approximately 10mm.

The flange support structure 136 also comprises an integral mounting and heating element by which the counteracting flange support portion 137 is mounted and heated for forming and curing.

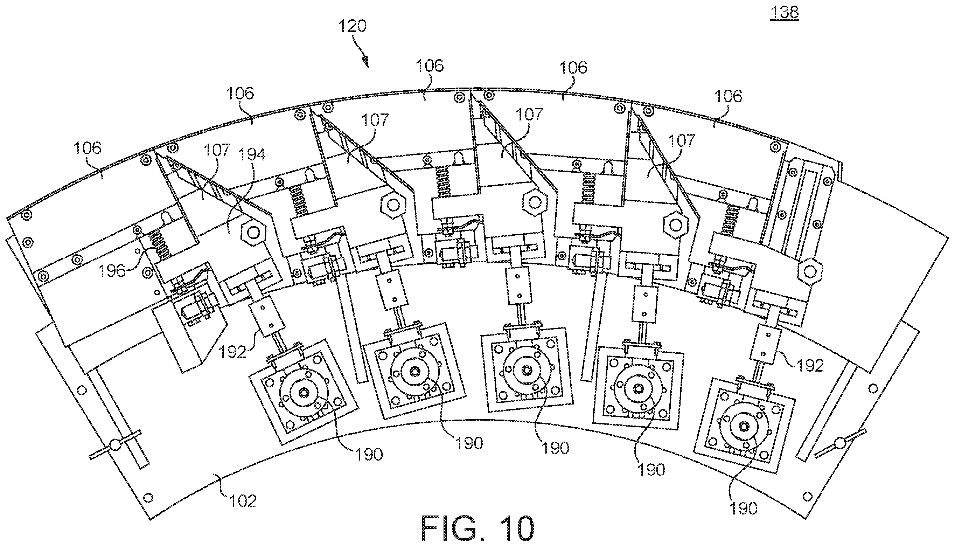

**Figure 10** shows a drive mechanism 138 for the forming assembly. The drive mechanism 138 comprises a plurality of drive units, each having a rotary motor 190 for each pair of adjacent forming and filler elements 106, 107 and arranged to drive a linear guide rod 192 along a guide direction slightly offset from the radial direction (in other embodiments, the guide direction may be substantially radial). The guide rod 192 is coupled to a guide block 194 which is fixedly secured to the filler element 107, and is coupled to the forming element 106 by a compression spring 196. The guide block is constrained to move along guide rails (not shown) secured to the support structure 103. The drive units also include radial stops (not shown) for stopping the radial motion of the respective elements 106, 107. The drive units are configured to gradually drive the forming elements 106 and filler elements 107 from their respective lay-up positions to their respective forming positions. In particular, the compression spring 196 provides a lost-motion connection between the guide block 194 and the forming element 106 so that, in use, the forming element 106 reaches its respective forming position and the filler element 107 subsequently extends into its forming position between adjacent forming elements 106.

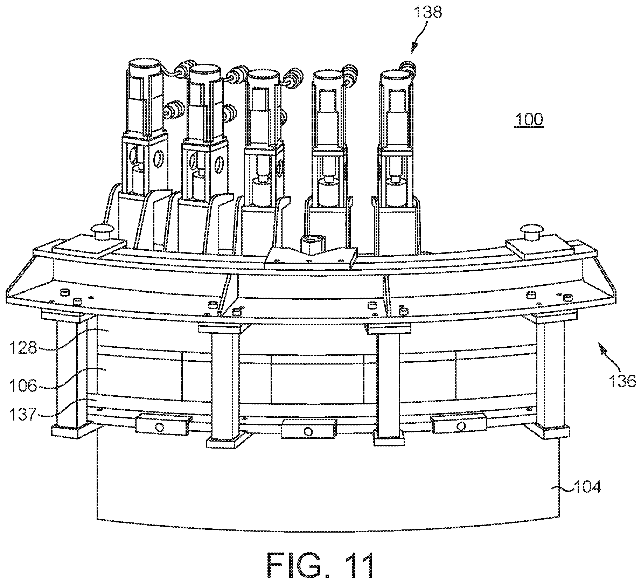

**Figure 11** shows a portion of the apparatus 100 corresponding to one sixth of the full annulus and in particular shows the arrangement of the tool 102 including the body portion 104, five forming elements 106, the continuation portion 128, together with the flange support structure 136 and a portion of the actuation mechanism 138 corresponding to the five flange-forming portions 106 shown.

A method of forming a composite component using the apparatus 100 will now be described, by way of example, with reference to Figures 3-11.

The apparatus 100 is oriented on a support surface, such as a floor, so that its central axis extends vertically. The apparatus 100 is prepared for a lay-up operation by detaching the flange support structure 132, if attached. Additionally, the actuation mechanism 138 (Figure 10) is controlled to return the forming assembly 105 to the lay-up configuration. The forming elements 106 are circumferentially adjacent one another.

With the forming assembly in the lay-up configuration (Figures 3, 6, 7) a continuous lay-up surface 132 is defined on the tool 102 by the radially outer surfaces of the body portion 104, the forming assembly 105 (the forming elements 106) and the continuation portion 128. This lay-up surface 132 is accessible from a radially outer position.

In this embodiment, a release layer (not shown) is overlaid on the lay-up surface 132 before the lay-up operation is initiated.

A lay-up operation is conducted in which unidirectional tapes of pre-impregnated composite material are applied over the continuous lay-up surface 132 in successive layers or plies using an automatic tape laying (ATL) apparatus, thereby forming a substantially cylindrical composite pre-form 200 on the tool 102. In this embodiment, the tapes are applied in a combination of ±60º and 90º (i.e. vertical) orientations with respect to a plane normal to the axis of the tool, and extend over the lay-up surfaces 110, 120, of the body portion 104 and the forming elements 106. In other example methods, the lay-up operation may be conducted by hand, or using other methods such as Automatic Fibre Placement (AFP) or automatic tape winding.

The composite material is applied to the tool to provide a pre-form having a body region 206 extending over the body portion 104 of the tool and a flange region 208 extending over the lay-up surfaces 120 of the forming elements. In other example methods, the flange region 208 may additionally extend part-way over the lay-up surface 130 of the continuation portion 128 of the tool, and/or there may be a continuation region of the pre-form extending from the flange region 208 that may be cut away from the flange after forming or curing.

In this example, the composite material is applied to the tool to provide a pre-form 200 for a casing for a gas turbine having an axial length of 1000mm and a flange radius of 65mm. The composite material is applied to the tool so that the body region 206 has an axial extent over the body portion 104 of 1000mm and the flange region has an axial extent over the forming assembly of at least 65mm.

Once the lay-up operation is complete, adhesive tapes 202 are applied in annular loops to the body portion 104 and continuation portion 128 below and above the pre-form 200 respectively, and a vacuum bag 204 is placed over the pre-form 200 and sealed with the tapes 202 against the tool 102.

Vacuum tubes (not shown) are extended through the vacuum bag to the space enclosed between the tool 102 and the vacuum bag 204, and a vacuum source such as a vacuum pump is applied to the vacuum tubes to create a partial vacuum in the space occupied by the pre-form 200. In this example, a partial vacuum is formed so that an unbalanced pressure force from the ambient atmosphere is applied through the vacuum bag onto the pre-form 200.

The forming operation is initiated by the controller causing the heating apparatus (i.e. the body heater 114 and flange heaters 123) to heat the pre-form 200 to a threshold forming temperature, which in this example is 80ºC.

When the pre-form 200 has reached the threshold forming temperature, the controller causes the actuation mechanism 138 to drive the forming elements 106 and the filler elements radially outwardly from the lay-up configuration to the forming configuration (Figures 3-5 and 6-9). As the forming elements 106 move radially outwardly, circumferential gaps form between them and the filler elements 107 extend into these gaps.

As the flange-forming portions 106 move radially outwardly, the flange region 208 of the pre-form is caused to slide over the lay-up surface 120 and onto the primary flange-forming surfaces 122 (i.e. the underside of the flange-forming portion 106) and the secondary flange-forming surface 156 (i.e. the underside of the filler portions 107), which together form a substantially continuous flange-forming surface. The movement of the flange-forming portions 106 causes the flange region 208 to plastically deform around and between the flange-forming surface 122, 156 and the flange-facing surface 140 of the counteracting support element 137, thereby forming the radial flange of the component.

During the forming operation, the body region 206 of the pre-form remains substantially in place against the body portion 104 of the tool 100, held in position by the counteracting support element 137. The forming assembly 105 is configured to move slowly during the forming operation, such as at approximately 120mm per hour, to ensure that the layers of the composite pre-form 200 are able to move relative one another during the forming operation without creating wrinkles in the pre-form.

Once the flange forming operation is complete (Figures 5, 8, 9), the controller initiates a curing operation and causes the heating apparatus to heat the pre-form 200, including the formed flange and transition region, to at least a threshold curing temperature, which in this embodiment is 135ºC. The controller also controls the vacuum source so that an unbalanced pressure force is applied to the pre-form through the vacuum bag.

After a curing period of 6 hours, the controller turns off the heaters and the cured casing 14 is allowed to cool on the tool 102. The flange support structure 136 is removed from the tool 102 and the vacuum bag and associated equipment is removed from the cured component. The flange assembly 105 is moved back to the lay-up configuration, and the cured casing 14 is removed from the tool.

The casing 14 is then trimmed to remove any continuation portion of the pre-form extending beyond the desired dimensions of the flange.

The invention allows a curved flanged component to be formed from a pre-form by driving forming elements radially outwardly during a forming process, despite the inherent problem that circumferential gaps will form between the forming elements. The filler elements of the forming assembly are configured to move into the respective gaps so as to provide a substantially continuous flange-forming surface.

The expression substantially continuous is intended to mean that there is no step change in the profile of a surface defined across two or more surfaces.

## Claims

1. A method of forming a composite component (14) having a curved body (28) and an integral flange (16, 18) from a pre-form (200) using forming apparatus (100) comprising:
a tool (102) comprising a curved body portion (104) having a lay-up surface (110) and a forming assembly (105) comprising a plurality of forming elements (106) each having a lay-up surface (120) and a primary flange-forming surface (122); and a plurality of filler elements (107) each having a secondary flange-forming surface (156);
the method comprising:
providing a pre-form (200) over the lay-up surfaces (110, 120) of the curved body portion (104) and the forming elements (106) of the tool in a layup configuration of the forming assembly (105);
moving the forming elements (106) radially outwardly from the layup configuration to respective forming positions so that the forming elements (106) are circumferentially spaced apart from one another to form gaps therebetween;
moving the filler elements (107) radially outwardly to respective forming positions in the circumferential gaps between the forming elements (106) so that the primary and secondary flange-forming surfaces (122, 156) form a substantially continuous flange-forming surface in a forming configuration of the forming assembly (105);
wherein movement of the forming assembly (105) from the layup configuration to the forming configuration causes a region of the pre-form (200) to deform between the continuous flange-forming surface and a counteracting forming surface to form the integral flange (16, 18) of the component (14).

2. A method according to claim 1, wherein the forming elements (106) reach the respective forming positions before the filler elements (107) reach the respective forming positions; and/or
wherein the forming elements (106) and filler elements (107) are moved simultaneously.

3. A method according to claim 1 or 2, further comprising providing the tool (102) in the layup configuration so that the lay-up surfaces (110, 120) of the curved body portion (104) and the forming elements (106) are substantially continuous.

4. A method according to any preceding claim, further comprising laying-up the pre-form (200) on the tool (102) in the layup configuration.

5. A method according to any preceding claim, further comprising providing a counteracting support (137), and wherein the counteracting support (137) defines the counteracting forming surface (140).

6. A method according to any preceding claim, further comprising heating the tool (102) before moving the forming elements (106) and filler elements (107) from the layup configuration to the forming configuration; and
optionally wherein the tool (102) is heated after the pre-form (200) is laid up on the tool (102).

7. A method according to any preceding claim, wherein the component (14) is annular or semi-annular; and/or
wherein the component (14) is a gas-turbine engine in accordance with any preceding claim.

8. A method according to any preceding claim, wherein the tool (102) or forming apparatus (100) is in accordance with any of claims 9-15.

9. A tool (102) for forming a composite component (14) having a curved body (28) and an integral flange (16, 18) from a pre-form (200), the tool (102) comprising:
a curved body portion (104) having a lay-up surface (110); and
a forming assembly (105) having a lay-up configuration and a forming configuration, the forming assembly (105) comprising:
a plurality of forming elements (106) each having a lay-up surface (120) and a primary flange-forming surface (122), the forming elements (106) being radially outwardly moveable from the lay-up configuration to the forming configuration, in which the forming elements (106) are circumferentially spaced from one another;
a plurality of filler elements (107) each having a secondary flange-forming surface (156), the filler elements (107) being arranged to move into the circumferential gaps between the forming elements (106) in the forming configuration so as to form a substantially continuous flange-forming surface; and wherein in use a pre-form (200) can be
disposed on the layup surfaces (110, 120) of the curved body portion (104) and the forming elements (106) in the layup configuration, and wherein movement to the forming configuration causes the pre-form (200) to be deformed between the continuous flange-forming surface and a counteracting forming surface (140) to form the integral flange (16, 18).

10. A tool (102) according to claim 9, wherein the layup surface (110) of the curved body portion (104) is substantially continuous with the layup surfaces (120) of the forming elements (106) in the layup configuration; and/or
wherein the layup surface (110) of the curved body portion (104) is radially spaced apart from the layup surfaces (120) of the forming elements (106) in the layup configuration.

11. A tool (102) according to claims 9 or 10, wherein the primary and secondary flange-forming surfaces (122, 156) extend at least partly radially.

12. A tool (102) according to any of claims 9 to 11, wherein the forming elements (106) and the filler elements (107) are alternately arranged.

13. A tool (102) according to any of claims 9 to 12, further comprising a drive means (138) for moving the forming assembly (105) from the lay-up configuration to the forming configuration, the drive means (138) comprising a plurality of drive units, each drive unit being arranged to move at least one forming element (106);
wherein each drive unit is configured to move the or each respective forming element (106) and an adjacent filler element (107) from respective retracted positions corresponding to the lay-up configuration to respective extended positions corresponding to the forming configuration;
wherein each drive unit is configured so that the respective filler element (107) reaches its respective forming position after the forming element (106) reaches its respective forming position; and
wherein a lost motion connection is provided between each drive unit and the respective forming element (106).

14. A tool (102) according to any of claims 9 to 13, wherein the tool (102) is for forming an annular or semi-annular component (14); and/or
wherein the tool is for forming a casing (14) for a gas-turbine engine.

15. Forming apparatus (100) for forming a composite component (14) having a curved body (28) and an integral flange (16, 18), the apparatus (100) comprising:
a tool (102) in accordance with any of claims 9 to 14; and
a counteracting support (137) detachably attachable to the tool (102) over a pre-form (200) received on the tool (102), the counteracting support (137) having a counteracting forming surface (140) arranged to oppose the flange-forming surfaces (122, 156) of the forming assembly (105) so that in use a region of the pre-form (200) is deformed between the forming assembly (105) and the counteracting support (137) to form the flange (16, 18) of the component (14).

## Patentansprüche

1. Verfahren zum Formen einer Verbundkomponente (14), die einen gekrümmten Körper (28) und einen integrierten Flansch (16, 18) aufweist, aus einem Vorformling (200) unter Verwendung einer Formungsvorrichtung (100), Folgendes umfassend:
ein Werkzeug (102), das einen gekrümmten Körperabschnitt (104) aufweist, der eine Auflagefläche (110) und eine Formungsanordnung (105) aufweist, die mehrere Formungselemente (106), wobei jedes eine Auflagefläche (120) und eine primäre flanschformende Fläche (122) aufweist; und mehrere Füllelemente (107), wobei jedes eine sekundäre flanschformende Fläche (156) aufweist, umfasst;
wobei das Verfahren Folgendes umfasst:
Bereitstellen eines Vorformlings (200) über den Auflageflächen (110, 120) des gekrümmten Körperabschnitts (104) und der Formungselemente (106) des Werkzeugs in einer Auflagekonfiguration der Formungsanordnung (105);
Bewegen der Formungselemente (106) von der Auflagekonfiguration radial nach außen zu den entsprechenden Formungspositionen, sodass die Formungselemente (106) in Umfangsrichtung voneinander beabstandet sind, um Zwischenräume dazwischen auszubilden;
Bewegen der Füllelemente (107) radial nach außen in die entsprechenden Formungspositionen in den Zwischenräumen in Umfangsrichtung zwischen den Formungselementen (106), sodass die primäre und sekundäre flanschformende Fläche (122, 156) eine im Wesentlichen durchgehende flanschformende Fläche in einer Formungskonfiguration der Formungsanordnung (105) ausbilden;
wobei das Bewegen der Formungsanordnung (105) von der Auflagekonfiguration zur Formungskonfiguration bewirkt, dass ein Teil des Vorformlings (200) zwischen der durchgehenden flanschformenden Fläche und einer entgegenwirkenden Formungsfläche umgeformt wird, um den integrierten Flansch (16, 18) der Komponente (14) auszubilden.

2. Verfahren nach Anspruch 1, wobei die Formungselemente (106) die entsprechenden Formungspositionen erreichen, bevor die Füllelemente (107) die entsprechenden Formungspositionen erreichen; und/oder wobei die Formungselemente (106) und die Füllelemente (107) gleichzeitig bewegt werden.

3. Verfahren nach Anspruch 1 oder 2, ferner das Bereitstellen des Werkzeugs (102) in der Auflagekonfiguration umfassend, sodass die Auflageflächen (110, 120) des gekrümmten Körperabschnitts (104) und die Formungselemente (106) im Wesentlichen durchgehend sind.

4. Verfahren nach einem der vorstehenden Ansprüche, ferner das Auflegen des Vorformlings (200) auf dem Werkzeug (102) in der Auflagekonfiguration umfassend.

5. Verfahren nach einem der vorstehenden Ansprüche, ferner das Bereitstellen eines entgegenwirkenden Trägers (137) umfassend und wobei der entgegenwirkende Träger (137) die entgegenwirkende Formungsfläche (140) definiert.

6. Verfahren nach einem der vorstehenden Ansprüche, ferner das Erwärmen des Werkzeugs (102) vor dem Bewegen der Formungselemente (106) und Füllelemente (107) von der Auflagekonfiguration zur Formungskonfiguration umfassend; und
optional wobei das Werkzeug (102) erwärmt wird, nachdem der Vorformling (200) auf das Werkzeug (102) gelegt wurde.

7. Verfahren nach einem der vorstehenden Ansprüche, wobei die Komponente (14) ringförmig oder halbringförmig ist; und/oder
wobei die Komponente (14) ein Gasturbinenmotor nach einem der vorstehenden Ansprüche ist.

8. Verfahren nach einem der vorstehenden Ansprüche, wobei das Werkzeug (102) oder die Formungsvorrichtung (100) einem der Ansprüche 9-15 entspricht.

9. Werkzeug (102) zum Formen einer Verbundkomponente (14), die einen gekrümmten Körper (28) und einen integrierten Flansch (16, 18) aufweist, aus einem Vorformling (200), wobei das Werkzeug (102) Folgendes umfasst:
einen gekrümmten Körperabschnitt (104), der eine Auflagefläche (110) aufweist; und
eine Formungsanordnung (105), die eine Auflagekonfiguration und eine Formungskonfiguration aufweist, wobei die Formungsanordnung (105) Folgendes umfasst:
mehrere Formungselemente (106), wobei jedes eine Auflagefläche (120) und eine primäre flanschformende Fläche (122) aufweist, wobei die Formungselemente (106) von der Auflagekonfiguration zur Formungskonfiguration, in der die Formungselemente (106) in Umfangsrichtung voneinander beabstandet sind, radial nach außen beweglich sind;
mehrere Füllelemente (107), wobei jedes eine sekundäre flanschformende Fläche (156) aufweist, wobei die Füllelemente (107) angeordnet sind, um sich in die Zwischenräume in Umfangsrichtung zwischen den Formungselementen (106) in der Formungskonfiguration zu bewegen, um eine im Wesentlichen durchgehende flanschformende Fläche auszubilden; und
wobei bei der Verwendung ein Vorformling (200) auf den Auflageflächen (110, 120) des gekrümmten Körperabschnitts (104) und der Formungselemente (106) in der Auflagekonfiguration angeordnet werden kann und wobei das Bewegen in die Formungskonfiguration bewirkt, dass der Vorformling (200) zwischen der durchgehenden flanschformenden Fläche und einer entgegenwirkenden Formungsfläche (140) umgeformt wird, um den integrierten Flansch (16, 18) auszubilden.

10. Werkzeug (102) nach Anspruch 9, wobei die Auflagefläche (110) des gekrümmten Körperabschnitts (104) in der Auflagekonfiguration mit den Auflageflächen (120) der Formungselemente (106) im Wesentlichen durchgehend ist; und/oder
wobei die Auflagefläche (110) des gekrümmten Körperabschnitts (104) in der Auflagekonfiguration von den Auflageflächen (120) der Formungselemente (106) radial beabstandet ist.

11. Werkzeug (102) nach einem der Ansprüche 9 oder 10, wobei die primäre und sekundäre flanschformende Fläche (122, 156) zumindest teilweise radial verlaufen.

12. Werkzeug (102) nach einem der Ansprüche 9 bis 11, wobei die Formungselemente (106) und die Füllelemente (107) abwechselnd angeordnet sind.

13. Werkzeug (102) nach einem der Ansprüche 9 bis 12, ferner ein Antriebsmittel (138) zum Bewegen der Formungsanordnung (105) von der Auflagekonfiguration zur Formungskonfiguration umfassend, wobei das Antriebsmittel (138) mehrere Antriebseinheiten umfasst, wobei jede Antriebseinheit angeordnet ist, um mindestens ein Formungselement (106) zu bewegen;
wobei jede Antriebseinheit dazu ausgelegt ist, das oder jedes entsprechende Formungselement (106) und ein angrenzendes Füllelement (107) aus entsprechenden eingefahrenen Positionen, die der Auflagekonfiguration entsprechen, zu entsprechenden ausgefahrenen Positionen, die der Formungskonfiguration entsprechen, zu bewegen; wobei jedes Antriebselement so ausgelegt ist, dass das entsprechende Füllelement (107) seine entsprechende Formungsposition erreicht, nachdem das Formungselement (106) seine entsprechende Formungsposition erreicht; und wobei eine Totgangverbindung zwischen jeder Antriebseinheit und dem entsprechenden Formungselement (106) bereitgestellt ist.

14. Werkzeug (102) nach einem der Ansprüche 9 bis 13, wobei das Werkzeug (102) zum Formen einer ringförmigen oder halbringförmigen Komponente (14) bestimmt ist; und/oder
wobei das Werkzeug zum Formen eines Gehäuses (14) für einen Gasturbinenmotor bestimmt ist.

15. Formungsvorrichtung (100) zum Formen einer Verbundkomponente (14), die einen gekrümmten Körper (28) und einen integrierten Flansch (16, 18) aufweist, wobei die Vorrichtung (100) Folgendes umfasst:
ein Werkzeug (102) nach einem der Ansprüche 9 bis 14; und einen entgegenwirkenden Träger (137), der über einem auf dem Werkzeug (102) aufgenommenen Vorformling (200) lösbar an dem Werkzeug (102) befestigt werden kann, wobei der entgegenwirkende Träger (137) eine entgegenwirkende Formungsfläche (140) aufweist, die gegenüber den flanschformenden Flächen (122, 156) der Formungsanordnung (105) angeordnet ist, sodass bei der Verwendung ein Teil des Vorformlings (200) zwischen der Formungsanordnung (105) und dem entgegenwirkenden Träger (137) umgeformt wird, um den Flansch (16, 18) der Komponente (14) auszubilden.

## Revendications

1. Procédé de formation d'un composant composite (14) ayant un corps incurvé (28) et une bride intégrée (16, 18) à partir d'une préforme (200) en utilisant un appareil de formation (100) comprenant :
un outil (102) comprenant une partie de corps incurvé (104) ayant une surface de superposition (110) et un ensemble de formation (105) comprenant une pluralité d'éléments de formation (106) ayant chacun une surface de superposition (120) et une surface de formation de bride primaire (122) ; et une pluralité d'éléments de remplissage (107) ayant chacun une surface de formation de bride secondaire (156) ;
le procédé comprenant les étapes consistant à :
fournir une préforme (200) sur les surfaces de superposition (110, 120) de la partie de corps incurvé (104) et les éléments de formation (106) de l'outil dans une configuration de superposition de l'ensemble de formation (105) ;
déplacer les éléments de formation (106) radialement vers l'extérieur de la configuration de superposition jusqu'aux positions de formation respectives, de sorte que les éléments de formation (106) soient circonférenciellement espacés l'un de l'autre pour former des espaces entre eux ;
déplacer les éléments de remplissage (107) radialement vers l'extérieur jusqu'à des positions de formation respectives dans les espaces circonférentiels entre les éléments de formation (106) de sorte que les surfaces de formation de bride primaire et secondaire (122, 156) forment une surface de formation de bride sensiblement continue dans une configuration de formation de l'ensemble de formation (105) ;
le déplacement de l'ensemble de formation (105) de la configuration de superposition à la configuration de formation amenant une région de la préforme (200) à se déformer entre la surface de formation de bride continue et une surface de formation antagoniste pour former la bride intégrée (16, 18) du composant (14).

2. Procédé selon la revendication 1, les éléments de formation (106) atteignant les positions de formation respectives avant que les éléments de remplissage (107) n'atteignent les positions de formation respectives ; et/ou
les éléments de formation (106) et les éléments de remplissage (107) étant déplacés simultanément.

3. Procédé selon la revendication 1 ou 2, comprenant en outre l'étape consistant à fournir l'outil (102) dans la configuration de superposition de sorte que les surfaces de superposition (110, 120) de la partie de corps incurvé (104) et les éléments de formation (106) soient sensiblement continus.

4. Procédé selon l'une quelconque des revendications précédentes, comprenant en outre l'étape consistant à superposer la préforme (200) sur l'outil (102) dans la configuration de superposition.

5. Procédé selon l'une quelconque des revendications précédentes, comprenant en outre l'étape consistant à fournir un support antagoniste (137), et le support antagoniste (137) définissant la surface de formation antagoniste (140).

6. Procédé selon l'une quelconque des revendications précédentes, comprenant en outre l'étape consistant à chauffer l'outil (102) avant de déplacer les éléments de formation (106) et les éléments de remplissage (107) de la configuration de superposition à la configuration de formation ; et
éventuellement, l'outil (102) étant chauffé après que la préforme (200) a été superposée sur l'outil (102).

7. Procédé selon l'une quelconque des revendications précédentes, le composant (14) étant annulaire ou semi-annulaire ; et/ou
le composant (14) étant un moteur à turbine à gaz selon l'une quelconque des revendications précédentes.

8. Procédé selon l'une quelconque des revendications précédentes, l'outil (102) ou l'appareil de formation (100) étant selon l'une quelconque des revendications 9 à 15.

9. Outil (102) pour former un composant composite (14) ayant un corps incurvé (28) et une bride intégrée (16, 18) à partir d'une préforme (200), l'outil (102) comprenant :
une partie de corps incurvé (104) ayant une surface de superposition (110) ; et
un ensemble de formation (105) ayant une configuration de superposition et une configuration de formation, l'ensemble de formation (105) comprenant :
une pluralité d'éléments de formation (106) ayant chacun une surface de superposition (120) et une surface de formation de bride primaire (122), les éléments de formation (106) pouvant être déplacés radialement vers l'extérieur de la configuration de superposition à la configuration de formation, les éléments de formation (106) étant circonférenciellement espacés les uns des autres ;
une pluralité d'éléments de remplissage (107) ayant chacun une surface de formation de bride secondaire (156), les éléments de remplissage (107) étant conçus pour se déplacer dans les espaces circonférentiels entre les éléments de formation (106) dans la configuration de formation de sorte à former une surface de formation de bride sensiblement continue ; et
lors de l'utilisation, une préforme (200) pouvant être disposée sur les surfaces de superposition (110, 120) de la partie de corps incurvé (104) et les éléments de formation (106) dans la configuration de superposition, et le déplacement vers la configuration de formation amenant la préforme (200) à être déformée entre la surface de formation de bride continue et une surface de formation antagoniste (140) pour former la bride intégrée (16, 18).

10. Outil (102) selon la revendication 9, la surface de superposition (110) de la partie de corps incurvé (104) étant sensiblement continue avec les surfaces de superposition (120) des éléments de formation (106) dans la configuration de superposition ; et/ou
la surface de superposition (110) de la partie de corps incurvé (104) étant espacée radialement des surfaces de superposition (120) des éléments de formation (106) dans la configuration de superposition.

11. Outil (102) selon la revendication 9 ou 10, les surfaces de formation de brides primaire et secondaire (122, 156) s'étendant au moins partiellement radialement.

12. Outil (102) selon l'une quelconque des revendications 9 à 11, les éléments de formation (106) et les éléments de remplissage (107) étant disposés en alternance.

13. Outil (102) selon l'une quelconque des revendications 9 à 12, comprenant en outre un moyen d'entraînement (138) pour déplacer l'ensemble de formation (105) de la configuration de superposition à la configuration de formation, le moyen d'entraînement (138) comprenant une pluralité d'unités d'entraînement, chaque unité d'entraînement étant conçue pour déplacer au moins un élément de formation (106) ;
chaque unité d'entraînement étant conçue pour déplacer le ou chaque élément de formation (106) respectif et un élément de remplissage (107) adjacent de positions rétractées respectives correspondant à la configuration de superposition à des positions étendues respectives correspondant à la configuration de formation ;
chaque unité d'entraînement étant conçue de sorte que l'élément de remplissage (107) respectif atteigne sa position de formation respective après que l'élément de formation (106) atteint sa position de formation respective ; et
une liaison à mouvement perdu étant prévue entre chaque unité d'entraînement et l'élément de formation (106) respectif.

14. Outil (102) selon l'une quelconque des revendications 9 à 13, l'outil (102) étant destiné à former un composant annulaire ou semi-annulaire (14) ; et/ou
l'outil étant destiné à former un carter (14) pour un moteur à turbine à gaz.

15. Appareil de formation (100) pour former un composant composite (14) ayant un corps incurvé (28) et une bride intégrée (16, 18), l'appareil (100) comprenant :
un outil (102) selon l'une quelconque des revendications 9 à 14 ; et
un support antagoniste (137) pouvant être fixé de manière amovible à l'outil (102) sur une préforme (200) reçue sur l'outil (102), le support antagoniste (137) ayant une surface de formation antagoniste (140) conçue pour s'opposer aux surfaces de formation de bride (122, 156) de l'ensemble de formation (105), de sorte que, lors de l'utilisation, une région de la préforme (200) soit déformée entre l'ensemble de formation (105) et le support antagoniste (137) pour former la bride (16, 18) du composant (14).
